# EUROPEAN PATENT APPLICATION

(11) **EP 4 527 206 A1**
(43) Date of publication of application: **26.03.2025**
(21) Application number: 23306588.7
(22) Date of filing: 22.09.2023
(51) Int. Cl.: A23B 5/06, A23P 20/10, A23D 9/06

(54) **EGG-COATING FLUID BASED ON BIO-SOURCED OILS**

(71) Applicant: TOTALENERGIES ONETECH, 92400 Courbevoie (FR)
(72) Inventor: CHATTERJEE, Victor Avisek, 700009 Kolkata (IN); PERUMALSAMY, Jayachandran, 609307 Porayar (IN)
(74) Representative: Cabinet Nony

(57) **Abstract**

The invention relates to an egg-coating fluid comprising at least:
- a date seed oil, and
- an iso-paraffinic oil derived from palm oil,
the egg-coating fluid having a kinematic viscosity at 40°C lower than or equal to 25 mm²/s.

It also relates to the use of the egg-coating fluid for coating eggs.

## Description

The present invention deals with egg-coating fluids, in particular bio-sourced egg-coating fluids. It also relates to the use of egg-coating fluids for coating eggs, in particular for increasing shelf life of eggs.

Eggs form an important part of the diet for people over all cultures and regions.

They are a rich source of proteins, vitamins, minerals and fats. They are used in a variety of cuisines all over the world. Some functional properties possessed by eggs allow it to have a wide variety of applications such as emulsifying, foaming, gelling and whipping.

But eggs have a particular shelf-life and tend to deteriorate over time. This is due to the fact that eggshells have very small pores on their surfaces, through which water vapor and carbon dioxide escape, causing deterioration of the egg. In addition to the escape of water vapor and carbon dioxide, there may be entry of certain microorganisms through the shell causing bacterial decay of the egg.

This deterioration of the egg can be prevented by sealing the surface pores by using some oils.

Until now, the oils used as egg-coating fluids are mainly mineral oils. To the knowledge of the inventors, a completely bio-sourced alternative is still not available.

Therefore, there is a need for bio-sourced egg-coating fluids, in particular having a performance in increasing the shelf life of eggs at least as good as, or even better than known egg-coating fluids, in particular based on mineral oils.

There is also a need for bio-sourced egg-coating fluid, in particular for increasing the shelf life of eggs, meeting the required optimum viscosity requirements in order to penetrate the egg pores.

The present invention aims also to provide a bio-sourced egg-coating fluid, which can be completely devoid of water in order to prevent any microbial growth, and also preferably devoid of any sort of odor.

Another aim of the present invention is to provide a bio-sourced egg-coating fluid, that does not adhere to the surface of the eggshell and drains off easily.

There is also a need for providing a bio-sourced egg-coating fluid, having a low sulfur content, being in particular biodegradable, and preferably able to extend the shelf life of the eggs by 30 days.

The present invention aims also to provide a bio-sourced egg-coating fluid, giving a natural and fresh-looking aspect to the eggshell, said fluid being preferably odorless, colorless, and tasteless.

Another aim of the present invention is to provide a bio-sourced egg-coating fluid, that drains easily and does not leave any trace of coating or odor after its application on the eggshell.

There is also a need for providing a bio-sourced egg-coating fluid which production requires lower consumption, in particular energy consumption, than known egg-coating fluids, for instance based on mineral oils.

Thus, the present invention relates to an egg-coating fluid comprising at least:
- a date seed oil, and
- an iso-paraffinic oil derived from palm oil,
the egg-coating fluid having a kinematic viscosity at 40°C lower than or equal to 25 mm²/s, in particular strictly lower than 25 mm²/s.

The egg-coating fluid according to the invention is advantageously mainly based on bio-sourced oils.

Advantageously, the egg-coating fluid according to the invention extends the shelf life of eggs by creating a barrier on the pores of the eggshells prohibiting escape of water vapor and carbon dioxide from the interior of the egg (as evidenced by weight loss) and preventing bacterial growth, as explained later in the examples of the present application.

Unexpectedly, and as shown in the examples, the inventors have found that the egg-coating fluid according to the invention allows not only to reach a similar efficiency to clog the pores on the egg surface as the known oils based on mineral oils, but also allows to reduce significantly the bacterial growth within the egg, preventing the bacterial growth until the 5^{th} week.

Thus, the invention also relates to the use of the egg-coating fluid according to the invention for coating eggs, in particular for increasing the shelf life of eggs.

Preferably, the shelf life of eggs that are coated with the egg-coating fluid according to the invention is extended of at least 30 days, in comparison with an uncoated egg.

The shell life of eggs is for example measured with the float test as detailed in the examples. In this test, the eggs are slowly immersed in water. If the eggs sink in water, they are considered to pass the test indicating little or no deterioration of the egg via the loss of water vapor and carbon dioxide. If the eggs float on the water, they are considered to fail the test, implying a great loss in weight due to the loss of water vapor and carbon dioxide from the interior of the egg causing its deterioration.

Advantageously, the egg-coating fluid allows to obtain an excellent coverage on the surface of the eggshell. In particular, the egg-coating fluid can prohibit the growth of bacteria inside the egg for a period of at least 4 weeks.

In particular, the egg-coating fluid can be used to form an external coating on the surface of uncracked eggs.

The invention also relates to a method for increasing the shell life of an egg, said method comprising at least one step of coating said egg with the egg-coating fluid according to the invention.

The eggs can be coated with the egg-coating fluid on the surface of the eggshell.

In particular, the egg-coating fluid is coated by spraying or by application with a brush on the surface of the eggshell, or by dipping in the egg-coating fluid, for instance during 30 seconds.

In the continuation of the text, the expressions "between ... and... ", "ranging from ... to...", "varying from ... to..." and "from ... to..." are equivalent and are intended to mean that the limits are included, unless otherwise mentioned.

### DETAILED DESCRIPTION

### Date seed oil

The date seed oil is a bio-sourced oil derived from the seeds of dates, in particular extracted from the seeds of dates, which are in particular available in tropical countries. The date seed oil is advantageously a vegetable-based oil extracted from a non-edible part of a fruit.

In particular, the date seed oil used according to the invention can comprise at least one fatty acid selected from the group consisting of oleic acid (C₁₈H₃₄O₂) (C18:1), lauric acid (C₁₂H₂₄O₂) (C12:0), palmitic acid (C₁₆H₃₂O₂) (C16:0), myristic acid (C₁₄H₂₈O₂) (C14:0), linoleic acid (C₁₈H₃₂O₂) (C18:2), stearic acid (C₁₈H₃₆O₂) (C18:0), and mixtures thereof.

Preferably, the date seed oil used according to the invention comprises a mixture of fatty acids. Preferably, the date seed oil used according to the invention comprises oleic acid (C18:1), lauric acid (C12:0), palmitic acid (C16:0), myristic acid (C14:0), linoleic acid (C18:2), stearic acid (C18:0), and mixtures thereof.

The date seed oil can comprise, relative to the total weight of the fatty acids in said date seed oil, from 26.3% to 52.2% by weight, preferably from 40% to 50% by weight, even more preferably from 41.3% to 47.7% by weight, and preferentially from 42% to 45% by weight, and preferably 42.6% by weight, of oleic acid.

The date seed oil can comprise, relative to the total weight of the fatty acids in said date seed oil, from 5.8% to 34.2% by weight, preferably from 10% to 20% by weight, more preferably from 10.2% to 17.8% by weight, and even more preferably from 12% to 17% by weight, and preferably 16.2% by weight, of lauric acid.

The date seed oil can comprise, relative to the total weight of the fatty acids in said date seed oil, from 7.0% to 15.1% by weight, preferably from 7.0% to 9.8% by weight, and more preferably from 7% to 8% by weight, and even more preferably 7.4% by weight, of palmitic acid.

The date seed oil can comprise, relative to the total weight of the fatty acids in said date seed oil, from 3.1% to 15.7% by weight, preferably from 5% to 10% by weight, and more preferably from 6.5% to 11.0% by weight, and even more preferably 6.5% by weight, of myristic acid.

The date seed oil can comprise, relative to the total weight of the fatty acids in said date seed oil, from 0.3% to 21.0% by weight, preferably from 9.2% to 19.2% by weight, and more preferably from 10% to 15% by weight, and even more preferably 12.7% by weight, of linoleic acid.

The date seed oil can comprise, relative to the total weight of the fatty acids in said date seed oil, from 1.7% to 5.7% by weight, preferably from 2.8% to 3.9% by weight, and more preferably from 3% to 3.5% by weight, and even more preferably 3.2% by weight, of stearic acid.

In a preferred embodiment, the date seed oil comprises, relative to the total weight of the fatty acids in said date seed oil, from 42% to 45% by weight of oleic acid, from 12% to 17% by weight of lauric acid, from 7% to 8% by weight of palmitic acid, from 6.5% to 11.0% by weight of myristic acid, from 10% to 15% by weight of linoleic acid and from 3% to 3.5% by weight of stearic acid, in particular 42.6% by weight of oleic acid, 16.2% by weight of lauric acid, 7.4% by weight of palmitic acid, 6.5% by weight of myristic acid, 12.7% by weight of linoleic acid and 3.2% by weight of stearic acid.

In particular, the date seed oil has a flash point from 140°C to 300°C, preferably from 250°C to 320°C, more preferably from 280°C to 315°C. According to a preferred embodiment, the flash point of said date seed oil is 312°C. The flash point of an oil can be measured according to ASTM 93 standard.

In particular, the date seed oil has a pour point from -10°C to 10°C, preferably from 0°C to 10°C. According to a preferred embodiment, the pour point of the date seed oil is 9°C. The pour point of an oil can be measured according to ASTM D97 standard.

In particular, the date seed oil has a boiling point from 396°C to 637°C. The boiling point of an oil can be measured according to ASTM D86 or D2887 standard.

In particular, the date seed oil is inherently biodegradable. The biodegradability of an oil can be measured by the OECD 301B standard test or by the OECD 306 standard test. Preferably, the biodegradability at 28 days of the date seed oil according to the invention is of at least 58% at 28 days as measured according to the OECD 301B standard or the OECD 306 standard, in particular from 58% to 60% at 28 days, more particularly of 58.13% at 28 days.

In particular, the date seed oil can have a kinematic viscosity at 40°C from 25 mm²/s to 41.6 mm²/s, preferably from 30 mm²/s to 40 mm²/s. According to a preferred embodiment, said kinematic viscosity at 40°C is 35.2 mm²/s. The kinematic viscosity at 40°C of an oil can be measured according to ASTMD445 standard.

### Iso-paraffinic oil derived from palm oil

The iso-paraffinic oil used in the egg-coating fluid according to the invention is derived from palm oil. Preferably, the iso-paraffinic oil is a bio-sourced oil derived from palm oil. The iso-paraffinic oil is advantageously a vegetable-based oil.

For the purpose of the invention, the expression "iso-paraffinic oil" means an oil comprising iso-paraffins, in particular at least 60% by weight of iso-paraffins, more particularly at least 80% by weight of iso-paraffins, preferably at least 90% by weight of iso-paraffins, more preferably at least 95% by weight of iso-paraffins, relative to the total weight of the iso-paraffinic oil. Iso-paraffins are branched alkanes.

The iso-paraffinic oil derived from palm oil can comprise iso-paraffins having from 15 to 18 atoms of carbon, preferably more than 60% by weight, more preferably more than 80% by weight of iso-paraffins having from 15 to 18 atoms of carbon, relative to the weight of the iso-paraffinic oil derived from palm oil.

The iso-paraffinic oil derived from palm oil can further comprise n-paraffins, in particular less than 40% by weight of n-paraffins, more particularly from 0.5% to 20% by weight of n-paraffins, preferably from 1% to 10% by weight of n-paraffins, more preferably from 2% to 5% by weight of n-paraffins, relative to the total weight of the iso-paraffinic oil. N-paraffins are linear alkanes.

The iso-paraffinic oil derived from palm oil can comprise less than 20% by weight of naphtens, relative to the weight of the iso-paraffinic oil derived from palm oil.

The iso-paraffinic oil derived from palm oil can comprise less than 50 ppm by weight, in particular less than 20 ppm by weight, of aromatics, relative to the weight of the iso-paraffinic oil derived from palm oil.

In particular, the iso-paraffinic oil derived from palm oil can comprise more than 80% by weight of iso-paraffins having from 15 to 18 atoms of carbon, less than 20% by weight of naphtens and less than 50 ppm, notably less than 20 ppm, by weight of aromatics, relative to the weight of the iso-paraffinic oil derived from palm oil.

In particular, the iso-paraffinic oil derived from palm oil can have a kinematic viscosity at 40°C from 2 to 4 mm²/s, in particular from 3 to 3.5 mm²/s. According to a preferred embodiment, said kinematic viscosity at 40°C is 3 mm²/s.

In particular, the iso-paraffinic oil derived from palm oil has a flash point from 100°C to 150°C, preferably from 115°C to 140°C, more preferably from 125°C to 135°C. According to a preferred embodiment, the flash point of said iso-paraffinic oil is 128°C.

In particular, the iso-paraffinic oil derived from palm oil has a pour point from -80°C to -30°C, preferably from -60°C to -50°C. According to a preferred embodiment, the pour point of said iso-paraffinic oil is -54°C.

In particular, the iso-paraffinic oil derived from palm oil has a boiling point from 265°C to 322°C.

In particular, the iso-paraffinic oil derived from palm oil is biodegradable. Preferably, the biodegradability at 28 days of said iso-paraffinic oil is of at least 80% at 28 days as measured according to the OECD 301B standard or the OECD 306 standard, in particular from 80% to 85% at 28 days, more particularly of 83% at 28 days.

### Egg-coating fluid

The egg-coating fluid according to the invention comprises at least a date seed oil, and an iso-paraffinic oil derived from palm oil.

The kinematic viscosity at 40°C of the egg-coating fluid is lower than or equal to 25 mm²/s, in particular strictly lower than 25 mm²/s. The egg-coating fluid can have a kinematic viscosity at 40°C of at least 5 mm²/s, preferably of at least 5.5 mm²/s, more preferably of at least 6 mm²/s.

In particular, the egg-coating fluid can have a kinematic viscosity at 40°C from 5 mm²/s to 20 mm²/s, in particular from 6 mm²/s to 20 mm²/s, more particularly from 6 mm²/s to 15 mm²/s, preferably from 6 mm²/s to 10 mm²/s, for instance from 6 mm²/s to 8 mm²/s. Alternatively, the egg-coating fluid can have a kinematic viscosity at 40°C from 10 mm²/s to 18 mm²/s. These viscosity ranges allow advantageously the egg-coating fluid to penetrate the pores in order to prevent the water vapor and carbon dioxide escape.

The kinematic viscosity at 40°C of the egg-coating fluid can be measured according to ASTMD445 standard.

The egg-coating fluid can comprise from 55% to 95% by volume, in particular from 60% to 80% by volume, more particularly from 60% to 70% by volume, of date seed oil, relative to the total volume of the egg-coating fluid.

The egg-coating fluid can comprise from 5% to 45% by volume, in particular from 20% to 40% by volume, more particularly from 30% to 40% by volume, of iso-paraffinic oil derived from palm oil, relative to the total volume of the egg-coating fluid.

Preferably, the date seed oil and the iso-paraffinic oil derived from palm oil can be employed in a volume ratio date seed oil/isoparaffinic oil being from 55/45 to 95/5, in particular from 60/40 to 80/20, more particularly from 60/40 to 70/30, for instance of 65/35. These ranges of volume ratio allow advantageously to improve the viscosity properties of the egg-coating fluid.

The egg-coating fluid can comprise less than 1% by weight, in particular less than 0.5% by weight, more particularly less than 0.05% by weight, of mineral oil and/or petroleum fraction relative to the total weight of the egg-coating fluid. In particular, the egg-coating fluid is devoid of any mineral oil or any petroleum fraction. Preferably, the egg-coating fluid is devoid of any mineral oil and any petroleum fraction.

The egg-coating fluid can comprise less than 0.5% by weight, in particular less than 0.1% by weight, more particularly less than 0.01% by weight of any surfactant(s) relative to the total weight of the egg-coating fluid. Preferably, the egg-coating fluid is devoid of any surfactant(s).

Preferably, the egg-coating fluid is free from toxic chemicals and pesticides.

The egg-coating fluid can comprise less than 5% by weight, in particular less than 1% by weight, more particularly less than 0.5% by weight, for instance less than 0.05% by weight of water, relative to the total weight of the egg-coating fluid. Preferably, the egg-coating fluid is devoid of water. The inventors believe that a low content of water or its absence allows to reduce, or even prevent, any microbial growth in the eggs.

The egg-coating fluid can comprise more than 95% by weight, in particular more than 99% by weight, more particularly more than 99.9% by weight, of bio-sourced oils relative to the total weight of the egg-coating fluid. Preferably, the egg-coating fluid consists of bio-sourced oils. For the purpose of the invention, a "bio-sourced" compound (for instance an oil) is derived partially or entirely from biomass, or obtained from renewable raw materials derived from biomass, preferably derived entirely from biomass, in particular from plants.

The egg-coating fluid can comprise more than 90% by weight, in particular more than 95% by weight, more particularly more than 99% by weight, of the combination of date seed oil and iso-paraffinic oil derived from palm oil relative to the total weight of the egg-coating fluid. Preferably, the egg-coating fluid consists of date seed oil and iso-paraffinic oil derived from palm oil.

In particular, the egg-coating fluid has a sulfur content of less than 10 ppm, in particular less than 5 ppm. The sulfur content can be measured according to ASTM D4294 standard.

Preferably, the egg-coating fluid is colorless and does not impart any color to an eggshell.

In particular, the egg-coating fluid has a flash point from 100°C to 150°C, and preferably from 115°C to 145°C, and in particular from 130°C to 140°C. These ranges of flash point entails safety while handling. The flash point can be measured according to ASTM 93 standard.

In particular, the egg-coating fluid has a pour point from -25°C to 25°C, preferably from -10°C to 10°C, in particular from -5°C to 5°C. The pour point can be measured according to ASTM D97 standard.

In particular, the egg-coating fluid has an initial boiling point from 200°C to 250°C, in particular from 220°C to 230°C, and a final boiling point above 380°C. The boiling point can be measured according to ASTM D86 or D2887 standard.

In particular, the egg-coating fluid is biodegradable. The biodegradability of the egg-coating fluid can be measured by the OECD 301B standard test or the OECD 306 standard test. Preferably, the biodegradability at 28 days of the egg-coating fluid according to the invention is of at least 58% at 28 days as measured according to the OECD 301B standard or the OECD 306 standard, in particular from 58% to 83% at 28 days.

The invention will now be described by means of the examples and figures that follow, which are given as nonlimiting illustrations of the invention.

### Figures

Figure 1 represents the evolution of the loss in weight of eggs coated with the egg-coating fluid CL1 according to the invention, described in example 1, and of uncoated eggs.
Figure 2 represents the evolution of the bacterial growth for eggs coated with the egg-coating fluid CL1 according to the invention, described in example 1, and for uncoated eggs.
Figure 3 represents the evolution of the loss in weight of eggs coated with the egg-coating fluid CL1 according to the invention, described in example 1, and of eggs coated with commercial egg-coated fluids based on white mineral oil.
Figure 4 represents the evolution of the bacterial growth for eggs coated with the egg-coating fluid CL1 according to the invention, described in example 1, and for eggs coated with commercial egg-coated fluids based on white mineral oil.
Figure 5 represents the evolution of the loss in weight of eggs coated with the egg-coating fluid CC1 outside of the invention, described in example 2, and of uncoated eggs.

### Examples

### Materials and methods

The following materials were used:
- date seed oil, which is a vegetable oil comprising oleic acid (42.6 wt%), lauric acid (16.2 wt%), palmitic acid (7.4 wt%), myristic acid (6.5 wt%), linoleic acid (12.7 wt%) and stearic acid (3.2 wt%);
- iso-paraffinic oil derived from palm oil (CAS number 928771-01-1), comprising 96.3 wt% of iso-paraffins, 3.7 wt% of n-paraffins, and containing less than 20 ppm by weight of aromatics.

The properties of the date seed oil and of the iso-paraffinic oil derived from palm oil are summarized in Table 1.

**Table 1**

| | **Iso-paraffinic oil derived from palm oil** | **Date seed oil** |
|---|---|---|
| *Aromatics* | <0.005% | |
| *Pour point* | -54°C | 9°C |
| *Initial boiling point* | 265°C | 396°C |
| *Final boiling point* | 322°C | 637°C |
| *Flash point* | 128°C (PMCC) | 312°C (COC) |
| *KV40 (cSt)* | 3 cSt | 35.2 cSt |
| *Biodegradability (OECD 306 standard)* | 83% at 28 days | 58.13% at 28 days |

### 1. Float test

In this test, two eggs from the same supplier, identical in size and shape, are slowly immersed in water. The eggs are immersed for 15 seconds.

If the eggs sink in water, the test indicates little or no deterioration of the eggs via the loss of water vapor and carbon dioxide. Thus, the test will be rated as "PASS".

If the eggs float on the water, the test indicates a great loss in weight due to the loss of water vapor and carbon dioxide from the interior of the eggs, and thus the deterioration of the eggs. The test will be rated as "FAIL".

### 2. Loss in weight

In this test, the loss of weight of eggs is measured at different times after the egg is coated with the egg coating fluid and kept under experimental conditions.

This test is also an indication of the loss of water vapor and carbon dioxide of the eggs, and thus allows to characterize eggs deterioration.

### 3. Test for bacterial growth

This test is performed based on IS 5402 : 2012 (Microbiology of food and animal feeding stuffs - Horizontal method for the enumeration of microorganism colony count technique at 30°C). The egg is broken, and the content is transferred into required peptone salt saline. They are serially diluted using saline and plating procedure is done for enumerating the total bacterial count from the egg sample. The eggs were tested for bacterial growth for a period of 5 weeks from coating.

### Example 1 - Preparation of an egg-coating fluid according to the invention (named "CL1")

A composition CL1 is prepared by mixing 65% by volume of date seed oil and 35% by volume of an iso-paraffinic oil derived from palm oil, relative to the total volume of the composition.

Composition CL1 has a kinematic viscosity at 40°C of 14.55 mm²/s, measured according to ASTM D445 standard.

Composition CL1 has also:
- a sulfur content of 2.4 ppm, measured according to ASTM D4294 standard;
- a flash point of 138°C, measured according to ASTM 93 standard;
- a pour point of 3°C, measured according to ASTM D97 standard; and
- an initial boiling point of 227°C and a final boiling point above 380°C, measured according to ASTM D86 or D2887 standard.

### Example 2 - Coating of eggs with a composition according to the invention (CL1) and with compositions outside of the invention

Fresh eggs were purchased. Then, the eggs are preliminary screened by making them to soak in water. The eggs that settled down have been washed clearly off from dust and taken for the analysis.

The eggs selected in the screening are weighed before coating. Then, the eggs are coated for 15 seconds. The coated eggs are allowed to rest at 30°C and their weight is again noted. Then, the tests are carried out for 5 weeks. Within these 5 weeks, the eggs are kept at 30°C.

Eggs are also coated according to the same method with the following commercial compositions outside of the invention, which are based on white mineral oil:
- Drakeol 7 commercialized by Penreco, Calumet Speciality Partners, L.P.;
- Eolane FC12 commercialized by TotalEnergies Fluides, France;
- Drakeol 5 commercialized by Penreco, Calumet Speciality Partners, L.P.

Eggs are also coated according to the same method with a composition CC1 made of 100% of the iso-paraffinic oil derived from palm oil.

### Example 3 - Characterization of eggs coated with CL1 according to example 2, compared with uncoated eggs

The eggs coated with CL1 according to example 2 are evaluated according to the float test as described previously. Uncoated eggs are also evaluated for comparison. The results of the float test are summarized in table 2.

**Table 2**

| **No. of week after coating** | **Uncoated Eggs** | **Eggs Coated with CL1** |
|---|---|---|
| **1^{st} Week** | PASS | PASS |
| **2^{nd} Week** | PASS | PASS |
| **3^{rd} Week** | FAIL | PASS |
| **4^{th} Week** | FAIL | PASS |
| **5^{th} Week** | FAIL | PASS |

The eggs coated with CL1 according to example 2 were found to pass the float test until the 5^{th} week, whereas for the uncoated eggs, the test already failed in the 3^{rd} week.

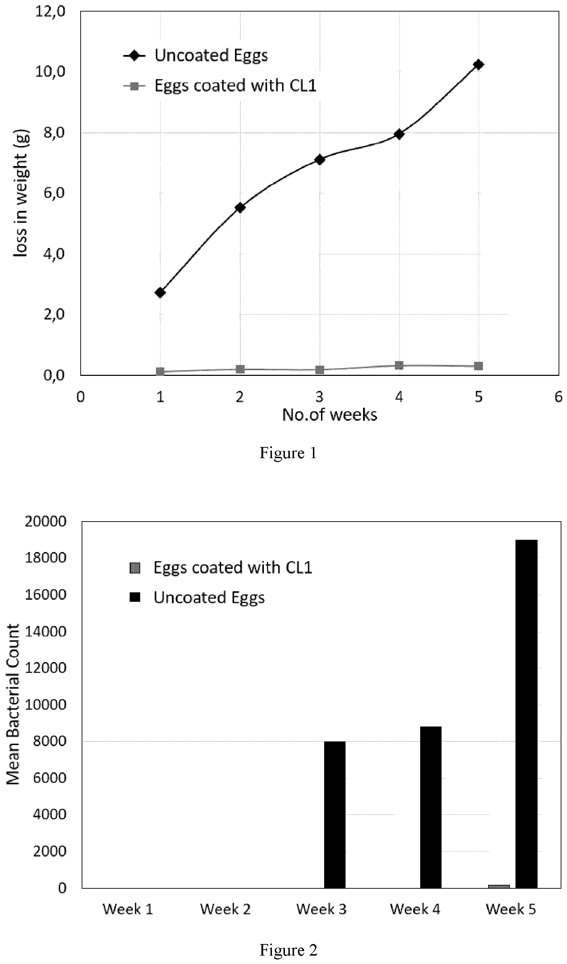

The variation in the loss in weight of the eggs coated with CL1 according to example 2 is measured as described in the material and methods section, and compared with the loss in weight of uncoated eggs, for a period of 5 weeks, as reported in figure 1.

The loss in weight with time is much lower for eggs coated according to the invention, compared to uncoated eggs. For instance, the weight loss for the eggs coated according to the invention is of 0.3 g on the 5^{th} week in comparison to a weight loss of 7.11 g on the 3^{rd} week for uncoated eggs, the weight loss on the 5^{th} week for the uncoated egg being 10.24 g. It confirms the efficacy of the egg-coating fluid according to the invention.

The bacterial growth of the eggs coated with CL1 according to example 2 is measured as described in the material and methods section, and compared with the bacterial growth of uncoated eggs, for a period of 5 weeks, as reported in figure 2.

The eggs coated according to the invention do not show any bacterial growth until the 5^{th} week, whereas the uncoated eggs show bacterial growth in high count from the 3^{rd} week.

### Example 4 - Characterization of eggs coated according to example 2 with an egg-coating fluid according to the invention, compared with eggs coated with egg-coating fluids outside of the invention

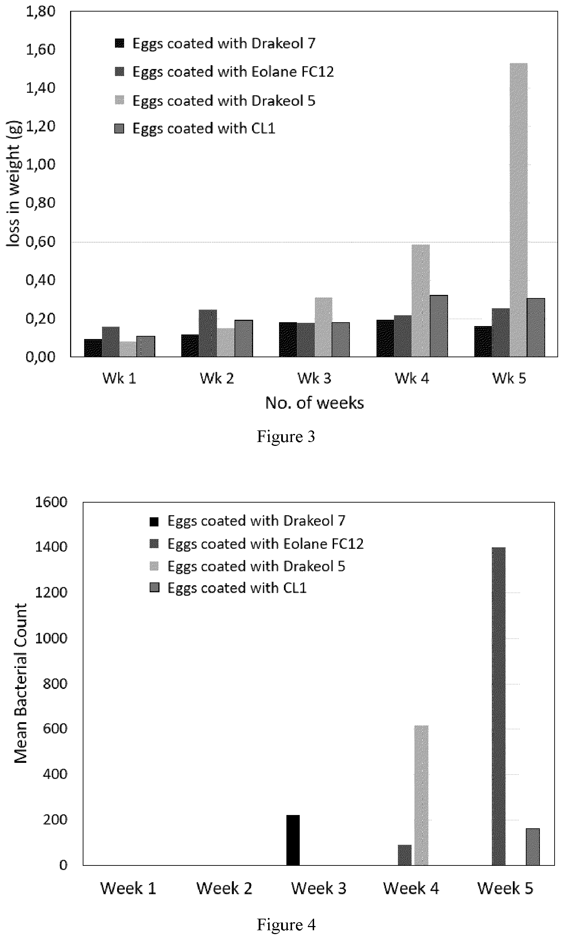

The loss in weight for the eggs coated with CL1 according to example 2 is also compared with the eggs coated with the commercial products based on white mineral oils described in example 2, as reported in figure 3.

Eggs coated with CL1 according to the invention exhibits similar weight loss values as the commercial products based on mineral oils. Thus, the composition CL1 according to the invention is able to clog the pores on the egg surface at least as efficiently as commercial compositions based on white mineral oil.

The bacterial growth for the eggs coated with CL1 according to example 2 is also compared with eggs coated with the commercial products based on white mineral oils described in example 2, as reported in figure 4. As a remark, bacterial growth tests are not conducted for Drakeol 7 after the 3^{rd} week and for Drakeol 5 after the 4^{th} week, as they already show high amount of bacterial growth in the 3^{rd}, respectively the 4^{th} week.

It is found that the composition CL1 according to the invention prevents the bacterial growth within the egg until the 5^{th} week, whereas other commercial composition prevents bacterial growth only until the 3^{rd} week for Drakeol 7, and until the 4^{th} week for Eolane FC12 and Drakeol 5.

### Example 5 - Characterization of eggs coated with CC1 according to example 2, and comparison with uncoated eggs

The eggs coated with CC1 according to example 2 are evaluated according to the float test as described previously. The results of the float test are summarized in table 3.

**Table 3**

| **No. of week after coating** | **Eggs Coated with CC1** |
|---|---|
| **1^{st} Week** | PASS |
| **2^{nd} Week** | FAIL |
| **3^{rd} Week** | FAIL |
| **4^{th} Week** | FAIL |

The eggs coated with CC1 according to example 2 were found to fail the float test from the 2^{nd} week.

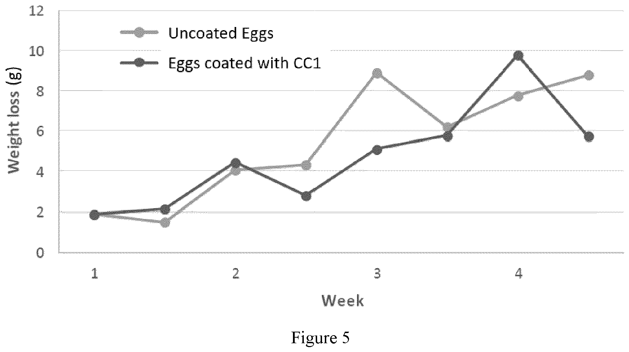

The variation in the loss in weight of the eggs coated with CC1 according to example 2 is measured as described in the material and methods section, and compared with the loss in weight of uncoated eggs, for a period of 5 weeks, as reported in figure 5.

The loss in weight with time is similar to that of uncoated eggs. Thus, iso-paraffinic oil derived from palm oil is not efficient, alone, as egg-coating fluid.

## Claims

1. Egg-coating fluid comprising at least:
- a date seed oil, and
- an iso-paraffinic oil derived from palm oil,
the egg-coating fluid having a kinematic viscosity at 40°C lower than or equal to 25 mm²/s, in particular strictly lower than 25 mm²/s.

2. Egg-coating fluid according to the preceding claim, the date seed oil and the iso-paraffinic oil derived from palm oil being employed in a volume ratio date seed oil/isoparaffinic oil being from 55/45 to 95/5, in particular from 60/40 to 80/20, more particularly from 60/40 to 70/30, for instance of 65/35.

3. Egg-coating fluid according to anyone of the preceding claims, the egg-coating fluid having a kinematic viscosity at 40°C of at least 5 mm²/s, preferably of at least 6 mm²/s, in particular from 6 mm²/s to 20 mm²/s, more particularly from 6 mm²/s to 15 mm²/s.

4. Egg-coating fluid according to anyone of the preceding claims, the egg-coating fluid comprising less than 1% by weight, in particular less than 0.5% by weight, more particularly less than 0.05% by weight, of mineral oil and/or petroleum fraction relative to the total weight of the egg-coating fluid, the egg-coating fluid being preferably devoid of any mineral oil and/or any petroleum fraction.

5. Egg-coating fluid according to anyone of the preceding claims, the egg-coating fluid comprising less than 0.5% by weight, in particular less than 0.1% by weight, more particularly less than 0.01% by weight of any surfactant(s) relative to the total weight of the egg-coating fluid, the egg-coating fluid being preferably devoid of any surfactant(s).

6. Egg-coating fluid according to anyone of the preceding claims, comprising less than 5% by weight, in particular less than 1% by weight, more particularly less than 0.5% by weight, for instance less than 0.05% by weight of water, relative to the total weight of the egg-coating fluid, the egg-coating fluid being preferably devoid of water.

7. Egg-coating fluid according to anyone of the preceding claims, the egg-coating fluid consisting of bio-sourced oils.

8. Egg-coating fluid according to anyone of the preceding claims, comprising more than 90% by weight, in particular more than 95% by weight, more particularly more than 99% by weight, of the combination of date seed oil and iso-paraffinic oil derived from palm oil relative to the total weight of the egg-coating fluid, the egg-coating fluid consisting preferably of date seed oil and iso-paraffinic oil derived from palm oil.

9. Egg-coating fluid according to anyone of the preceding claims, the date seed oil comprising, relative to the total weight of the fatty acids in said date seed oil:
- from 26.3% to 52.2% by weight, preferably from 40% to 50% by weight, more preferably from 41.3% to 47.7% by weight, even more preferably from 42% to 45% by weight, and preferably 42.6% by weight, of oleic acid,
- from 5.8% to 34.2% by weight, preferably from 10% to 20% by weight, more preferably from 10.2% to 17.8% by weight, even more preferably from 12% to 17% by weight, and preferably 16.2% by weight, of lauric acid,
- from 7.0% to 15.1% by weight, preferably from 7.0% to 9.8% by weight, more preferably from 7% to 8% by weight, even more preferably 7.4% by weight, of palmitic acid,
- from 3.1% to 15.7% by weight, preferably from 5% to 10% by weight, more preferably from 6.5% to 11.0% by weight, even more preferably 6.5% by weight, of myristic acid,
- from 0.3% to 21.0% by weight, preferably from 9.2% to 19.2% by weight, more preferably from 10% to 15% by weight, even more preferably 12.7% by weight, of linoleic acid, and/or
- from 1.7% to 5.7% by weight, preferably from 2.8% to 3.9% by weight, more preferably from 3% to 3.5% by weight, even more preferably 3.2% by weight, of stearic acid.

10. Egg-coating fluid according to anyone of the preceding claims, the iso-paraffinic oil derived from palm oil comprising more than 80% by weight of iso-paraffins having from 15 to 18 atoms of carbon, less than 20% by weight of naphtens and less than 50 ppm, notably less than 20 ppm, by weight of aromatics, relative to the weight of the iso-paraffinic oil derived from palm oil.

11. Egg-coating fluid according to anyone of the preceding claims, the iso-paraffinic oil derived from palm oil having a kinematic viscosity at 40°C from 2 to 4 mm²/s, in particular from 3 to 3.5 mm²/s.

12. Egg-coating fluid according to anyone of the preceding claims, having a sulfur content of less than 10 ppm.

13. Use of the egg-coating fluid according to anyone of the preceding claims for coating eggs.

14. Use according to the preceding claim, for increasing the shelf life of eggs.

15. Method for increasing the shell life of an egg, said method comprising at least one step of coating said egg with the egg-coating fluid according to any one of claims 1 to 12.
